# EUROPÄISCHE PATENTANMELDUNG

(11) **EP 0 528 087 A1**
(43) Veröffentlichungstag der Anmeldung: **24.02.1993**
(21) Anmeldenummer: 91307637.8
(22) Anmeldetag: 19.08.1991
(51) Int. Cl.: H04L 12/64, H04Q 11/04

(54) **Verfahren und Anordnung zur Übermittlung von STM-vermittelten Nachrichten über ATM-Vermittlungsstellen**

(71) Anmelder: SIEMENS AKTIENGESELLSCHAFT, D-80333 München (DE); GPT LIMITED, Coventry, CV3 1HJ (GB)
(72) Erfinder: Schmidt, Lothar, W-8080 Fürstenfeldbruck (DE); Jugel, Alfred, W-8192 Geretsried (DE); Mallinson, Andy, Poole BH12 1HX (GB); Rau, Peter, Dr., W-8000 München 60 (DE)

(57) **Zusammenfassung**

Ein Fernmeldenetz besteht in vorzugsweise überwiegender Anzahl aus ATM-Vermittlungen (ATM) und in vorzugsweise geringer Anzahl aus STM-Vermittlungen (STM). Von einer STM-Vermittlung (z.B. STM1) kommende und über eine ATM-Vermittlung (z.B. ATM1) zu einer weiteren STM- Vermittlung (z.B. STMy) zu vermittelnde Informationen werden zur Verringerung der Paketierzeit für die Durchschaltung durch die ATM-Vermittlung (ATM1) in Nachrichtenzellen derselben Länge wie die für die Übertragung zwischen ATM-Vermittlungen verwendeten Nachrichtenzellen paketiert, wobei jedoch jeweils Nachrichtenteile mehrerer STM-Zeitkanäle (K1 bis K4), die zum selben ATM-Vermittlungsausgang durchzuschalten sind, in einer Nachrichtenzelle gemultiplext werden.

## Beschreibung

Die Erfindung betrifft ein Fernmeldenetz, dessen Vermittlungsstellen in vorzugsweise überwiegender Anzahl auf der Basis asynchroner Durchschaltung von Nachrichtenpaketen in Nachrichtenzellen fester Länge über virtuelle Verbindungen arbeiten (ATM-Vermittlungen) und in vorzugsweise geringer Anzahl auf der Basis synchroner leitungsvermittelter Durchschaltung arbeiten (STM-Vermittlung) und bei dem wenigstens eine der ATM-Vermittlungen zusätzlich zu ihrer Ausstattung als ATM-Vermittlung Anschlußmöglichkeiten für mit STM-Vermittlungen verbindenden Übertragungsleitungen aufweist (ATM-Durchgangsvermittlung) oder Anschlußmöglichkeiten sowohl für solche Übertragungsleitungen als auch für mit im STM-Modus Informationen sendende und empfangende Endgeräte (STM-Endgeräte) verbindende Anschlußleitungen aufweist (ATM-Ortsvermittlung).

Ein derartiges Fernmeldenetz ist als Übergangsstadium zu künftigen Telekommunikations-Netzen zu verstehen, in denen durchgängig der Asynchronous-Transfer-Modus (ATM-Modus) zur Anwendung kommt. Gegenüber den derzeit installierten Fernmeldenetzen, die im Synchronous-Transfer-Modus (STM-Modus) arbeiten, weisen im ATM-Modus arbeitende Fernmeldenetze den wesentlichen Vorteil auf, daß die verfügbare Übertragungskapazität eines Übertragungskanals flexibel für eine Vielzahl von Diensten wie Sprache, Daten, Bildübertragung nutzbar ist und dabei zeit- und bedarfsabhängig einem einzigen Dienst oder einer Vielzahl von Diensten zugeteilt werden kann.

Die Einführung eines universellen Telekommunikationsnetzes auf ATM-Basis kann nur dann erfolgreich sein, wenn die Möglichkeit einer Zusamnmenarbeit bisher bestehender auf STM-Basis arbeitender 64 Kb/s-Sprachdienste abwickelnder Fernmeldenetze mit den neu entstehenden, auf ATM-Basis arbeitenden Vermittlungsstellen in wirtschaftlicher Weise möglich ist.

In diesem Zusammenhang ist eine Hybridlösung für ein Fernmeldenetz vorgeschlagen worden, die darauf hinausläuft, bei den Vermittlungsstellen drei funktional getrennte Systemkomponenten vorzusehen. Zum einen nämlich einen sogenannten Cross Connector für den Anschluß von Übertragungsleitungen, über die auf der Basis des STM-Modus Informationen höherer Bitraten, beispielsweise 2 Mb/s übertragen werden, der im wesentlichen die Funktionen eines elektronischen Hauptverteilers übernimmt. Ferner eine Schmalbandvermittlung, die praktisch den derzeitigen Schmalbandvermittlungen für den Anschluß von Anschluß- und Übertragungsleitungen auf STM-Basis bei einer Bitrate von 64 Kb/s entspricht. Schließlich eine Breitbandvermittlung, die auf ATM-Basis, also als Paketvermittlung mit Nachrichtenzellen fester Länge und der Herstellung virtueller Verbindungen arbeitet. Jede der drei Systemkomponenten eines solchen Hybridnetzes weist gesonderte Anschlußeinheiten und ein gesondertes Koppelfeld auf. Selbstverständlich ist eine derartige Lösung sehr kosten- und wartungsaufwendig.

Bei dem eingangs erwähnten Fernmeldenetz sind demgegenüber auf ATM-Basis arbeitenden universelle Netzknoten vorgesehen, die mit fortschreitendem Netzausbau in ihrer Anzahl immer mehr noch auf STM-Basis arbeitende Netzknoten überwiegen sollen und schließlich als einzige Netzknotenart vorhanden sein werden. Diese universellen Netzknoten weisen nur ein einziges ATM-Koppelnetz für alle drei Anschluß- bzw. Einsatzarten des erwähnten Hybrid-Fernmeldesystems auf.

Um auf STM-Basis herangeführte Informationen bearbeiten zu können, müssen diese in Schnittstelleneinheiten in ATM-Nachrichtenzellen paketiert und nach Durchgang durch das Koppelfeld wieder depaketiert und in adressierte Zeitschlitze eingeblendet werden, wozu die betreffenden Schnittstellen Paketier-Depaketiereinrichtungen aufweisen.

Da ein solcher universeller Netzknoten mit einem einheitlichen Koppelfeld, einheitlichen Schnittstellen und einer zentralen Steuerung versehen ist, sowie mit einheitlicher Wegesuche und einheitlichen Wartungsfunktionen arbeitet, ergeben sich niedrigere Investitionskosten und ein geringerer Wartungsaufwand als bei der erwähnten Hybridlösung. Außerdem ist eine Erweiterbarkeit ohne besonderen Aufwand in der Grundausstattung gegeben.

Um auch STM-Nachrichten in einem solchen universellen ATM-Netzknoten verarbeitenden zu können, müssen, wie dargelegt, die STM-Nachrichten in ATM-Nachrichtenzellen paketiert werden.

Das Format solcher ATM-Nachrichtenzellen ist schon weitgehend festgelegt, wobei je Nachrichtenzelle außer einem Nachrichtenkopf ein Nutzinformationsfeld vorgesehen ist, das 48 jeweils 8 Bit umfassende Zeitplätze, sogenannte Oktetts, umfaßt, von denen wenigstens eines für weitere Angaben beispielsweise über die Natur der Nachrichtenzelle ausgenutzt sein kann.

Für die Paketierung der jeweils mit 8 Bit kodierten Abtastproben eines Zeitkanals für die Übertragung von 64 K b/s-Sprachinformationen wird in diesem Fall die Zeitdauer von 47 Abtastpulsrahmen benötigt, so daß zusammen mit dem genannen einen Oktett eine Paketierzeit von 48x125 mus = 6ms erforderlich ist. Das Depaketieren erfordert zum Jitter-Ausgleich ca. 0,25 ms, so daß insgesamt bei der Übertragung in einer Richtung eine Zeitverzögerung von 6,25 ms entsteht.

In heutigen digitalen Fernsprechnetzen sind als Laufzeiten innerhalb der Vermittlungsstellen, die in erster Linie durch die Analog-Digital-Wandlung bzw. Digital-Analog-Wandlung zustandekommen, für Ortsvermittlungsstellen ca. 1,5 ms und für Durchgangsvermittlungsstellen ca. 1,0 ms je Übertragungsrichtung zugelassen, so daß sich für ein Netz, in dem eine Verbindung über maximal drei Ortsvermittlungsstellen und maximal sechs Durchgangsvermittlungsstellen bei einer maximalen Entfernung von etwa 1000 km läuft, eine zulässige Gesamtlaufzeit von höchstens 15 ms je Übertragungsrichtung ergibt.

In Großbritannien liegt die höchstzulässige Verzögerungszeit sogar nur bei 12,5 ms, in den USA sind es 17,5 ms je Übertragungsrichtung.
Die Forderungen an die Einhaltung von Laufzeitgrenzwerten dient dazu, die Sprachqualität sicherzustellen, da größere Laufzeiten wegen der Reflektionen der Sprachsignale an den Gabelschaltungen im Teilnehmerendgerät des hörenden Teilnehmers zu spürbaren Echoeffekten führen.

Die vorgenannten, im Zusammenhang mit dem Paketier-Depaketier-Vorgang verbundenen Verzögerungen von 6,25 ms liegen also um 5 ms über der geforderten Laufzeitgrenze für Vermittlungen.

Zur Gewährleistung der geforderten Sprachqualität unter diesen Umständen müßten je Übertragungsrichtung getrennte Echokompensatoren eingesetzt werden. Es müßte darüber hinaus aber auch dafür Sorge getragen sein, daß bei Sprechverbindungen mehrere Netzübergänge, bei denen es jeweils zu der diskutierten Verzögerung durch Paketier-Depaketiervorgänge kommt, vermieden werden, da eine Laufzeitkompensation in der Größenordnung wie sie bei mehrereren Netzübergängen erforderlich wird, mit Echokompensatoren nicht mehr zu bewältigen ist. Dies würde aber eine aufwendige Vermaschung zu den STM-Vermittlungsstellen des noch bestehenden STM-Netzes und den ATM-Vermittlungsstellen erfordern, die die Grundlage für das künftige Universalnetz sein sollen.

Im Zusammenhang mit einem Fernmeldenetz der eingangs genannten Art ist daher zum Zwecke der Verringerung der Verzögerungszeiten bei der Paketierung von STM-Sprachinformationen, die mit einer Übertragungsrate von 64 Kb/s übertragen werden, vorgeschlagen worden, die Nachrichtenzellen fester Länge des ATM-Systems nur teilweise mit STM-Nachrichten zu belegen (europäische Patentanmeldung 88 11 57 25.9.) Ein solches Vorgehen bedeutet natürlich eine schlechte Ausnutzung der Übertragungskapazität. Um hier einen gewissen Ausgleich zu schaffen, ist in der genannten Patentanmeldung auch vorgeschlagen worden, den Belegungsgrad der Nachrichtenzellen jeweils beim Verbindungsaufbau entsprechend im Zuge des Verbindungsaufbaus übertragenen Verbindungsaufbau-Informationen verbindungsindividuell festzulegen, d. h. für Fernverbindungen, die über mehrere Vermittlungsstellen führen, klein zu halten, dagegen für Verbindungen im Nahbereich einen größeren Füllungsgrad zuzulassen.

Gerade bei Fernverbindungen ist aber aus wirtschaftlichen Gründen eine hohe Bitrate besonders unerwünscht, da dort der Kostenanteil für die Übertragungstechnik denjenigen für die Vermittlungsstellen überwiegt. Davon abgesehen, erfordern natürlich die genannten Maßnahmen zur Verbesserung der Übertragungskapazitätsausnutzung steuerungsmaßig einen beträchtlichen Aufwand.

Die Aufgabe der Erfindung besteht daher darin, ein Fernmeldenetz der eingangs genannten Art so zu gestalten, daß im Hinblick auf die geforderte Sprachqualität Echokompensatoren und aufwendige Vermaschungsstrukturen weitgehend vermieden werden und dennoch keine wesentliche Verringerung des Ausnutzungsgrades der vorhandenen Übertragungskapzität für Nutzinformationen, hier also Sprachinformationen, hinzunehmen ist, wobei insbesondere die Anschlußgegebenheiten bei Ortsvermittlungen berücksichtigt werden.

Diese Aufgabe wird erfindungsgemäß durch die im Kennzeichen des Anspruchs 1 angegebenen Merkmale gelöst.

Bei dem erfindungsgemäßen Fernmeldenetz wird also im Zusammenhang mit der Durchschaltung von STM-Nachrichten durch das Koppelnetz einer ATM-Vermittlung mit unterschiedlichen Nachrichtenzellen gearbeitet. Es werden nämlich, sofern die STM-Informationen über eine ATM-Vermittlung zu einer weiteren STM-Vermittlung hin übertragen werden sollen, Nachrichtenzellen gebildet, die entweder eine geringere Länge als die Standardnachrichtenzelle aufweisen, oder Nachrichtenzellen, in denen Teilinformationen gemultiplext paketiert sind, die zu demselben einer bestimmten Vermittlungszielrichtung zugeordneten Koppelfeldausgang hin durchgeschaltet werden sollen. In beiden Fällen ist die Paketierverzögerungzeit geringer als beim Füllen einer Standardnachrichtenzelle mit Teilinformationen eines einzigen Zeitkanals und auch bei der zweiten Variante ist unter der Voraussetzung günstiger Anschlußverhältnisse eine gute Ausnutzung der Übertragungskapazität erzielbar.

Die Anschlußverhältnisse sind bei Ortsvermittlungen, bei denen jeweils mehrere STM-Informationen führende Teilnehmeranschlußleitungen durch eine von der Vermittlung abgesetzte Leitungseinheit mit einer zur Vermittlung führenden Multiplexleitung verbunden sind, insofern etwas ungünstig, als normalerweise über eine solche Leitungseinheit nicht gleichzeitig eine größere Anzahl von Verbindungen mit demselben Vermittlungsziel geführt wird, so daß bei der zweiten Variante für die Füllung der Nachrichtenzellen längere Wartezeiten als erwünscht in Kauf genommen werden bzw. nach vorgegebenen Wartezeiten teilgefüllte Zellen abgesendet werden müßten. Da andererseits die Beibehaltung der Zellenlänge von Standardzellen, wie sie bei der zweiten Variante gegeben ist, Vorteile mit sich bringt, wird gemäß einem weiteren Merkmal der Erfindung bei der geschilderten Anschlußsituation einer Ortsvermittlungsstelle mit einem weiteren Zellentyp gearbeitet, nämlich einem solchen, bei dem zwar wie bei der vorgenannten Variante Teilinformationen mehrerer Zeitkanäle in einer Nachrichtenzelle gemultiplext paketiert sind, dies jedoch ohne Rücksicht auf ein Vermittlungsziel, so daß die Paketierzeit von den Belegungsverhältnissen bei den an die Leitungseinheit angeschlossenen Anschlußleitungen weitgehend unabhängig ist und es wird erst im Schnittstellenbereich der Vermittlung, wo eine Konzentration des Verkehrs von mehreren Leitungseinheiten zusammenkommenden Multiplexleitungen stattfindet, eine Umsortierung in Nachrichtenzellen vorgenommen, in denen Teilinformationen von Kanälen gemultiplext sind, die dieselbe Vermittlungszielrichtung haben, oder aber in Nachrichtenzellen der erwähnten gegenüber Standardzellen geringeren Länge.

Bei einer Ausgestaltung der Erfindung sind die den abgesetzten Leitungseinheiten zugeordneten Einrichtungen, die aus einer Paketier-/Depaktiereinrichtung und einem Multiplexzellenerzeuger bestehen, Bestandteil dieser abgesetzten Leitungseinheiten, womit eine Zentralisierung der Zellenbildung für die auf der Mehrzahl der angeschlossenen Teilnehmeranschlußleitungen auftretenden Informationen gegeben ist.

Gemäß einer anderen Ausgestaltung der Erfindung können jedoch auch die den abgesetzten Leitungseinheiten zugeordneten Einrichtungen aus einer Vielzahl von Paketier-Depaketiereinrichtungen und einer Vielzahl von Zellenerzeugereinrichtungen bestehen, die jeweils Bestandteil von den Teilnehmeranschlußleitungen individuell zugeordneten Funtkionseinheiten sind. In diesem Falle findet also schon zwischen den Funktionseinheiten und der Leitungseinheit ein ATM-Betrieb statt.

Je nach Ausführungsvariante gemäß weiteren Ausgestaltungen der Erfindung kann es sich bei der Zellenerzeugung in den Funktionseinheiten um die Erzeugung von Multiplexzellen handeln, bei denen also wie auf der Multiplexleitung zwischen Leitungseinheit und Vermittlungsstelle Teilinformationen mehrerer Zeitkanäle ohne Rücksicht auf das Vermittlungsziel gemultiplext sind oder um Kurzzellen oder aber um Nachrichtenzellen handeln, die zwar gleich lang wie Standardzellen sind, deren Nachrichtenteil jedoch nur teilweise gefüllt ist.

Die Entscheidung darüber, welcher der Varianten der Vorzug zu geben ist, hängt von den Verkehrsverhältnissen bzw. davon ab, ob der Verringerung der Paketierverzögerung oder der optimalen Zellenausnutzung der Vorrang gegeben wird.

Gemäß noch einer anderen Ausgestaltung der Erfindung weist bei einer Version, bei der die Paketier-Depaketiereinrichtung zentralisiert für eine Vielzahl von Teilnehmeranschlußleitungen in der abgesetzten Leitungseinheit enthalten ist, diese Leitungseinheit außer einem auf STM-Basis arbeitenden Schmalbandkoppelfeld, das der Paketier-Depaketiereinrichtung vorgeschaltet ist, ein der Paketier-/Depaketiereinrichtung und dem Multiplexzellenerzeuger nachgeschaltetes, auf ATM-Basis arbeitendes Breitbandkoppelfeld auf, an das Teilnehmeranschlußleitungen, die zu Breitbandteilnehmern führen, direkt angeschlossen sind. Die weitere Behandlung der Breitband-Teilnehmerinformationen im Schnittstellenbereich, d. h. die Einordnung in entweder Kurzellen oder Multiplexzellen mit einheitlicher Vermittlungszielrichtung oder Standardzellen, sofern eine Weitervermittlung zu einer anderen ATM-Vermittlung in Frage kommt, erfolgt in derselben Weise wie bei den über das Schmalbandkoppelfeld von Schmaldbandteilnehmern kommenden Informationen.

Noch andere Ausgestaltungen der Erfindung betreffen den Anschluß von STM-Informationen führenden Teilnehmeranschlußleitungen über Leitungseinheiten, die nicht von der Vermittlung abgesetzt sind, sondern Bestandteil der ATM-Ortsvermittlung darstellen.

Wie auch beim Anschluß von mit anderen STM-Vermittlungen verbindenden Übertragungsleitungen werden in diesen Leitungseinheiten zugeordneten Einrichtungen entweder Kurzzellen oder zielrichtungseinheitlich zusammengefaßte Multiplexzellen gebildet, wobei als Ort der die Funktionen Paketieren/Depaketieren und Zellenbildung ausführenden Schaltungsteile ähnlich wie bei den abgesetzten Leitungseinheiten entweder die Leitungseinheiten selbst oder im Falle der Paketier-/Depaketiereinrichtungen den angeschlossenen Leitungen individuell zugeordnete Funktionseinheiten in Frage kommen.

Nachstehend wird die Erfindung anhand von Ausführungsbeispielen unter Bezugnahme auf eine Zeichnung näher erläutert.

In der Zeichnung zeigen:
FIG 1 das Format einer internen Standardnachrichtenzelle für die Durchschaltung durch Vermittlungsstellen in ATM-Fernmeldenetzen,
FIG 2 und 3 das Format von erfindungsgemäß innerhalb einer ATM-Vermittlung für die Durchschaltung von STM-Nachrichten zu STM-Vermittlungen verwendeten Nachrichtenzellen,
FIG 4 das Format von erfindungsgemäß bei ATM-Ortsvermittlungsstellen für die Übertragung zwischen einer abgesetzen Leitungseinheit für den Anschluß von Teilnehmeranschlußleitungen, die STM-Informationen führen und der Vermittlung gebildeten Nachrichtenzellen,
FIG 5 ein Blockschaltbild einer ATM-Ortsvermittlung, bei der STM-Informationen führende Teilnehmeranschlußleitungen über abgesetzte Leitungseinheiten angeschlossen sind,
FIG 6 eine entsprechende Darstellung einer ATM-Vermittlung, bei der der Anschluß der Teilnehmeranschlußleitungen über vermittlungszugehörige Leitungsanschlußeinheiten erfolgt, in verschiedenen Varianten.

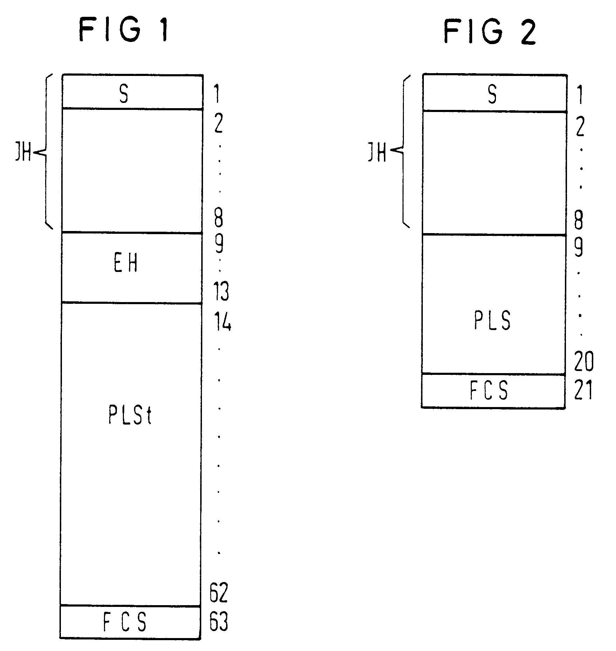

Die Standardnachrichtenzelle gemäß FIG 1 weist insgesamt 63 sogenannte Oktetts, d. h. Zeitplätze für jeweils 8 Bit auf. 8 solcher Oktettts werden für einen internen Zellenkopf IH (Internal Header) eingenommen, der im wesentlichen ein Synchronisationsoktett S, ferner Wegeinformationen für den Weg durch das Koppelfeld enthaltende Oktetts, sowie ein Oktett für eine Zellennummer zur Bestimmung der Zellenreihenfolge enthält. Ein weiterer Zellenkopf, der externe Zellenkopf EH (External Header), umfaßt 5 Oktetts und enthält Angaben über einen virtuellen Kanal und einen virtuellen Verbindungsweg, dem die betreffende Nachrichtenzelle zugeordnet ist.

Es schließt sich ein 48 Oktetts umfassender Informationsteil PLSt an, in dem die eigentlichen Fernmeldeinformationen übertragen werden und schließlich folgt noch ein Oktett FCS, das das Zellenende kennzeichnet.

Der vorerwähnte interne Zellenkopf IH wird nach Durchlaufen einer Vermittlungsstelle vor einer Weiterübertragung der Nachrichtenzelle entfernt, so daß extern in Erscheinung tretende Zellen lediglich aus dem externen Zellenkopf EH und aus dem Informationsteil PLSt bestehen.

Bei der in FIG 2 dargestellten Nachrichtenzelle, wie sie erfindungsgemäß für den Durchgang durch ATM-Vermittlungen bei von über eine ATM-Vermittlung führenden Verbindungen zwischen STM-Vermittlungen bzw. zwischen Endgeräten, die auf STM -Basis arbeiten, und STM-Vermittlungen Verwendung finden, ist lediglich ein interner Zellenkopf IH vorhanden, da diese Nachrichtenzellen außerhalb der ATMVermittlung nicht in Erscheinung treten. Er umfaßt beim dargestellten Beispiel 8 Oktetts.

Der Informationsteil PLS einer solchen Nachrichtenzelle umfaßt lediglich eine Teilmenge der Oktetts bei einer Standardzelle, womit sich die Paketierzeit entsprechend reduziert. Ein sich an den internen Zellenkopf anschließendes Oktett des Informationsteils enthält eine Angabe darüber, daß es sich bei der betreffenden Nachrichtenzelle um eine Kurzzelle handelt und zwei weitere Oktetts dienen der Angabe der Nummer des Zeitkanals der STM-Informationen und einer Angabe über die Zielschnittstelle, über die die STM-Nachrichten von der ATM-Vermittlung aus weitergegeben werden sollen. Ein Oktett FCS, das an den Informationsteil anschließt, kennzeichnet das Ende der Zelle.

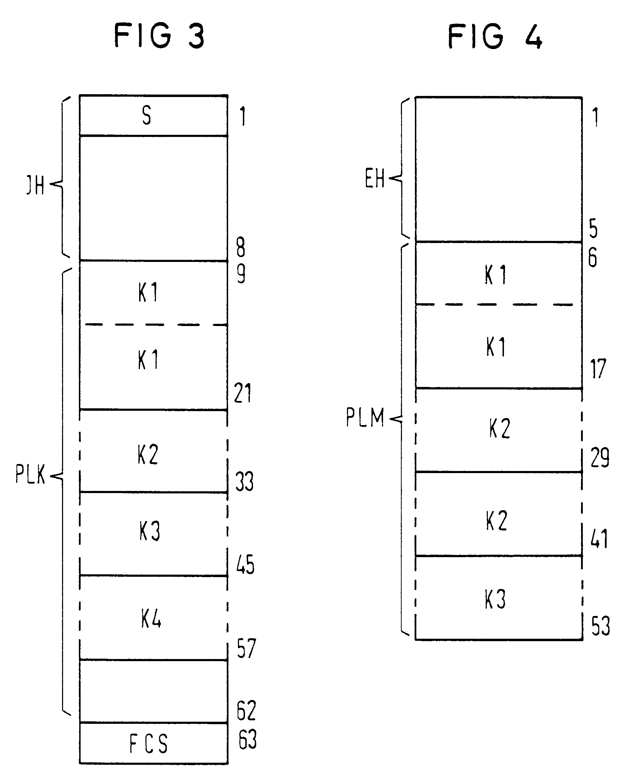

Bei der in FIG 3 dargestellten Nachrichtenzelle, nachstehend auch als Kompositzelle bezeichnet, wie sie erfindungsgemäß alternativ für den Durchgang durch ATM-Vermittlungen bei einer STM -Vermittlung oder einem auf STM-Basis arbeitenden Endgerät als Vermittlungsziel Verwendung findet, ist ebenfalls lediglich ein interner Zellenkopf IH vorhanden, der 8 Oktetts umfaßt.

Der Informationsteil PLK einer solchen Nachrichtenzelle ist im dargestellten Fall für die paketierten Informationsteile von vier Zeitkanälen ausgenutzt, wobei für jeden Zeitkanal 12 Oktetts zur Verfügung stehen, von denen wiederum 8 Oktetts für die eigentliche Kanalinformation ausgenutzt werden. Das bedeutet also, daß für die Erzeugung einer solchen Zelle eine Paketierzeit von 8 Pulsrahmen, also 8 x 125 mus = 1 ms zustandekommt, und damit ebenfalls ein Wert, der im Hinblick auf Echoprobleme noch vertretbar ist.

Die übrigen 4 für einen Zeitkanal ausgenutzten Oktetts enthalten u. a. die Kanaladresse sowie ggf. ein Reihenfolgemerkmal um die richtige Zellenreihenfolge je Kanal zu gewährleisten.

Bei der angenommenen Aufteilung der Nachrichtenzelle gemäß FIG 3, die dieselbe Länge aufweist wie die Standardnachrichtenzelle gemäß FIG 1 bleiben 4 Oktetts unausgenutzt.

Es sind jedoch im Rahmen dieser vorgegebenen Länge auch noch andere Aufteilungen möglich, beispielsweise können die Kanalinformationen von 5 Zeitkanälen gemultiplext sein, in welchem Falle dann lediglich 7 Oktetts pro Zeitkanal für die Kanalinformation zur Verfügung stehen.

Wesentlich bei der Belegung der Nachrichtenzelle gemaß FIG 3 ist, daß die gemultiplexten 4 Zeitkanäle einer Nachrichtenzelle für dieselbe Zielrichtung bestimmt sind, d. h. zum selben Koppelfeldausgang der ATM-Vermittlung durchgeschaltet werden sollen. Die Reihenfolge der Kanalplätze innerhalb einer Nachrichtenzelle sowie die Zuordnung der Kanäle zu Nachrichtenzellen, die zum selben Koppelfeldausgang, also zur selben Zielrichtung hin vermittelt werden sollen, ist erfindungsgemäß hingegeben beliebig.

Auf diese Weise wird die Abhängigkeit des Nutzungsgrades der gemultiplexte Kanäle führenden Nachrichtenzellen von der Verkehrsverteilung verringert. Der Ausnutzungsgrad solcher Nachrichtenzellen ist dann am geringsten, wenn bei n insgesamt vorhandener Koppelfeldausgängen zu n - 1-Ausgängen hin jeweils nur einer der ankommenden Zeitkanäle vermittelt werden soll und sämtliche übrigen ankommenden Zeitkanäle zu dem verbleibenden einen Ausgang hin zu vermitteln sind. Es ist dann nämlich nur ein Zeitkanalplatz in einer solchen Nachrichtenzellen belegt, die drei restlichen Zeitkanalplätze bleiben frei. Eine im Hinblick auf die Nachrichtenzellenausnutzung günstige Verkehrsverteilung liegt dann vor, wenn die ankommenden Zeitkanäle gleichmäßig auf sämtliche Koppelfeldausgänge zu verteilen sind.

Die Nachrichtenzellen gemäß FIG 4, wie sie erfindungsgemäß auf der Multiplexverbindung zwischen abgesetzten Leitungseinheiten für den Anschluß von Teilnehmeranschlußleitungen und einer ATM-Ortsvermittlung, also außerhalb der Vertmittlung Verwendung finden, weisen ebenfalls dieselbe Länge wie die Standardzellen auf, im Gegensatz zu den vorerwähnten Nachrichtenzellen gemäß FIG 3 führen sie jedoch einen externen Zellenkopf EH anstelle eines internen Zellenkopfes IH , da sie ggf. über Cross Connectoren anstattt durch das Koppelfeld der Vermittlung weitergeschaltet werden können müssen.

Der Nachrichtenteil PLM der Multiplexzellen gemäß FIG 4 enthält ähnlich wie derjenige der Kompositzellen gemäß FIG 3 Teilinformationen von vier Zeitkanälen, denen jeweils 12 Oktetts zur Verfügung stehen, wobei ebenfalls wiederum 8 derselben für die eigentlichen Nutzinformationen ausgenutzt sind und vier derselben für Adresseninformationen zur Verfügung stehen.

Im Unterschied zu den Verhältnissen bei den Nachrichtenzellen gemäß FIG 3 kann jedoch die Vermittlungszielrichtung der in einer Nachrichtenzelle gemultiplexten Zeitkanäle beliebig sein, so daß die Auslastung der Zellen und damit der Nutzungsgrad der Übertragungskapazität von den Verkehrsverhältnissen, also der Anzahl der der Leitungseinheit zugeführten Zeitkanäle und der Anzahl der Ziele, die von der Vermittlung aus erreicht werden können, unabhängig ist.

Aufgrund der letztgenannten Eigenschaft kann bei der Paketierung dieser Multiplexzellen mit gegenüber den Zellen gemäß FIG 3 wesentlich geringerer Wartezeiten zur Erzielung eines hohen Zellenfüllungsgrades gearbeitet werden.

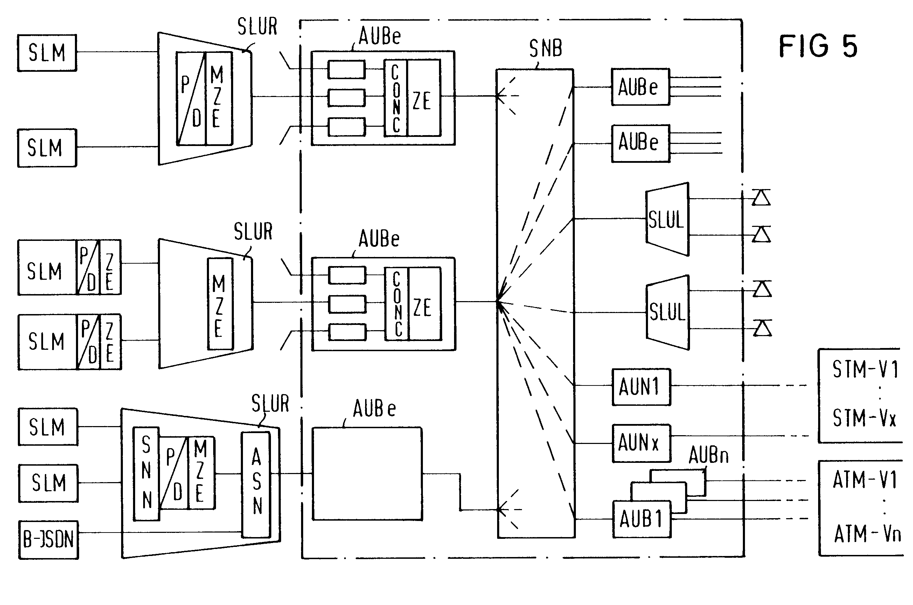

Die FIG 5 zeigt eine erfindungsgemäß strukturierte ATM-Ortsvermittlungsstelle, an die neben auf ATM-Basis arbeitenden Endgeräten, deren Anschluß hier nicht näher dargestellt ist, auf STM-Basis arbeitende Endgeräte angeschlossen sind, und die sowohl mit mindestens einer weiteren ATM-Vermittlung ATM-V über Verbindungsleitungen in Verbindung stehen, die in Schnittstellen AUB1 bis AUBn münden und mit mindestens einer STM-Vermittlung STM-V über Verbindungsleitungen in Verbindung stehen, die in Schnittstellen AUN1 bis AUNxn münden.

Der Anschluß der Teilnehmeranschlußleitungen erfolgt über leitungsindividuelle Funktionseinheiten SLM, die durch eine von der Vermittlung abgesetzte Leitungseinheit SLUR oder durch eine vermittlungszugehörige Leitungseinheit SULL zusammengefaßt sind.

Die abgesetzten Leitungseinheiten SLUR stehen über Multiplexübertragungsstrecken, die in Schnittstellen AUBe münden, mit der Vermittlung in Verbindung.

Als zentraler Teil einer solchen ATM-Ortsvermittlungsstelle ist ein auf ATM-Basis arbeitendes Breitbandkoppelfeld SNB angedeutet.

Die Schnittstellen AUBe und die Schnittstellen AUN bis AUNn , also solche, über die entweder Verbindungen mit auf STM-Basis arbeitenden Endgeräten oder Verbindungen zu einer STM-Vermittlung laufen, enthalten erfindungsgemäß Einrichtungen, durch die Nachrichtenzellen in einem Format gebildet werden, wie es für die Durchschaltung durch das Koppelnetz SNB Verwendung finden soll. Die Schnittstellen AUN1 bis AUNn, über die Verbindungen zu weiteren STM-Vermittlungen STM-V laufen, enthalten außerdem noch Paketier-Depaketiereinrichtungen.

Die Paketierung und die Depaketierung im Falle des Anschlusses von Teilnehmeranschlußleitungen über abgesetzte Leitungseinheiten SLUR erfolgt entweder zentral für sämtliche der an eine solche Leitungseinheit angeschlossenen Anschlußeinheiten durch eine in dieser Leitungseinheit enthaltene Paketier/Depaketiereinrichtung P/D, wie dies im oberen Teil der Figur angedeutet ist, oder durch leitungsindividuelle Paketier/Depaketiereinrichtungen, die Bestandteil von leitungsindividuellen Funktionseinheiten SLM sind, wie dies im mittleren Teil der Figur angedeutet ist.

Die Leitungseinheiten SLUR enthalten Einrichtungen MZE, durch die Multiplexzellen gemäß FIG 4 erzeugt werden, in die die von den STM-Endgeräten kommenden Informationen paketiert werden. Im Falle der im oberen Teil der Figur 5 gezeigten Version sind die zwischen den Funktionseinheiten SLM und der Anschlußeinheit SLUR übertragene Informationen noch STM-Informationen.

Im Falle der in der FIG 5 in der Mitte dargestellten Version enthalten die Funktionseinheiten außer den schon erwähnten leitungsindividuellen Paketier-/Depaketiereinrichtung P/D Einrichtungen ZE zur Zellenerzeugung, durch die entweder Kurzzellen gemäß FIG 2, Multiplexzellen gemäß FIG 4 oder Zellen gebildet werden, die zwar dieselbe Länge wie die Standardzellen aufweisen, jedoch nur teilweise gefüllt sind, allerdings mit den Teilinformationen nur eines einzigen Zeitkanals. In diesem Falle findet also zwischen den Funktionseinheiten SLM und der Leitungseinheit SLUR schon eine Übertragung im ATM-Modus statt.

Die Einrichtung MZE in der betreffenden Leitungseinheit SLUR hat in diesem Fall die Aufgabe der Umwandlung der genannten Nachrichtenzellen in Multiplexzellen.

Im unteren Teil der FIG 5 ist eine weitere Version des Anschlusses von Teilnehmeranschlußleitungen gezeigt, bei der wie bei der die Leitungseinheit SLUR wie im oberen Teil der Figur eine Einrichtung zur zentralen Paketierung und Depaketierung enthält, und bei der neben einem auf STM-Basis arbeitenden Schmalbandkoppelstufe SNN, das anschlußleitungsseitig der Paketier-Depaketiereinrichtung P/D angeordnet ist und an das mit Schmalbandteilnehmer verbindende, STM-Informationen führende Anschlußleitungen angeschlossen sind, ein vermittlungsseitig des Nachrichtenzellenerzeugers MZE dieser Leitungseinheit eine auf ATM-Basis arbeitende Breitbandkoppelstufe ASN angeschlossen ist, an die außerdem ATM-Informationen führende Breitbandendgeräte angeschlossen sind. Über diese Koppelstufen sind Internverbindungen zwischen den angeschlossenen Endgeräten möglich.

Die die Leitungseinheiten SLUR mit der Vermittlung verbindenden Multiplexübertragungsleitungen münden in Schnittstellen AUBe, in denen jeweils eine Konzentration des Verkehrs auf mehreren solcher Multiplexleitungen stattfindet. Diese Schnittstellen enthalten Umsetzeinrichtungen ZE, durch die die von den Leitungseinheiten her übertragenen Multiplexzellen gemäß FIG 4 entweder in Kurzzellen gemäß FIG 2 oder in Kompositzellen gemäß FIG 3 oder aber, sofern die betreffenden Informationen zur Weitergabe an eine weitere ATM-Vermittlung ATM-V bestimmt sind, in Standardzellen gemäß FIG 1 umgewandelt werden.

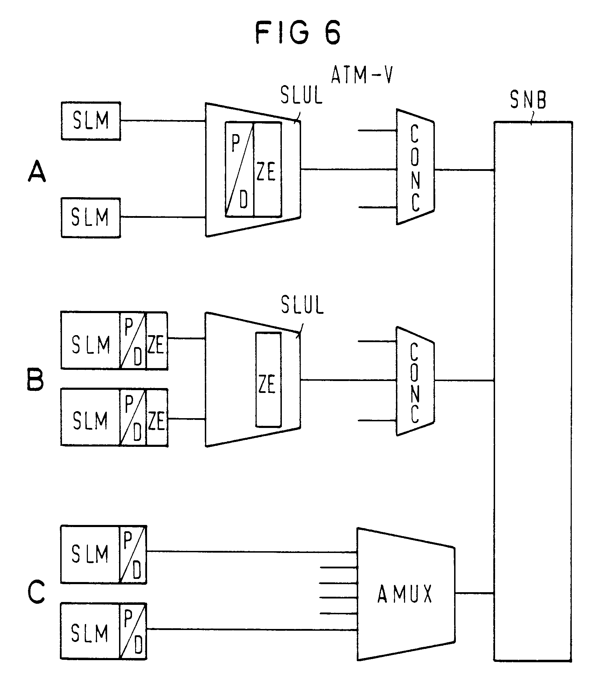

In FIG 6 sind die Verhältnisse beim Anschluß von STM-Informationen führenden Teilnehmeranschlußleitungen über zur Vermittlung gehörige Leitungseinheiten SLUL in verschiedenen Varianten gezeigt.

Bei der im oberen Teil der Figur dargestellten Version A findet die Paketierung und Depaketierung der STM-Informationen auf den angeschlossenen Teilnehmeranschlußleitungen zentral in der Leitungseinheit SLUL statt. Bei der im mittleren Teil der Figur dargestellten Version B sind die Paketier-/Depaketiereinrichtungen in den leitungsanschlußseitig individuell vorgesehenen Funktionseinheiten SLM angeordnet. Diese Funktionseinheiten enthalten außerdem Zellenerzeuger ZE, in denen entweder Multiplexzellen gemäß FIG 4 oder Kurzzellen gemäß FIG 2 erzeugt werden. In diesem Falle treten also schon zwischen den Funktionseinheiten SLM und der Leitungseinheit ATM-Informationen auf.

Sowohl bei der Version A als auch der Version B enthalten die Anschlußeinheiten SLUL Zellenerzeuger ZE, die im Falle der Version A originär und im Falle der Version B durch Umwandlung Nachrichtenzellen erzeugen, die entweder Kurzzellen gemäß FiG 2 oder Kompositzellen gemäß FIG 3 sind. Die Erzeugung von Kompositzellen ist bei dieser Anschlußkonstellation wegen der höheren Anzahl von angeschlossenen Teilnehmeranschlußleitungen und der dadurch reduzierten Anzahl von Zielen im Hinblick auf die Ausnutzung der Übertragungskapazität wesentlich günstiger als es bei abgesetzten Leitungseinheiten SLUR der Fall wäre, weswegen hier auf die zwischenzeitliche Erzeugung von Multiplexzellen gemäß FIG 4 verzichtet werden kann.

Um die Anschlußkapazität des Koppelnetzes SNB voll zu nutzen, werden bei den Versionen A und B jeweils mehrere Leitungseinheiten SLUL durch einen Konzentrator CONC zusammengefaßt.

Bei der Version C sind die Funktionen der Leitungseineit SLUL und des Konzentrators CONC in einer Einheit AMUX zusammengefaßt.

### Bezugszeichenliste

- IH =: Interner Zellenkopf
- S =: Synchronisationsoktett
- EH =: externer Zellenkopf
- PLSt =: Informationsteil
- FCS =: Zellenendeoktett
- PLS =: Informationsteil
- PLK =: Informationsteil
- PLM =: Nachrichtenteil
- ATM-V, =: ATM-Orts-Vermittlungsstelle
- AUB1 bis AUBn =: Schnittstelle
- AUN1 bis AUNxn =: Schnittstelle
- SLM =: Funktionseinheit
- SLUR =: abgesetzte Leitungseinheit
- SULL =: vermittlungszugehörige Leitungseinheit
- AUBew =: Schnittstelle
- SNB =: Breitbandkoppelfeld
- STM-V =: STM-Vermittlung
- P/D =: Paketier/Depaketiereinrichtung
- MZE =: Multiplexzellenerzeuger
- ZE =: Zellenerzeuger
- SNN =: Schmalbandkoppelstufe
- ASN =: Breitbandkoppelstufe
- CONC =: Konzentrator
- AMUX =: Leitungseinheit/Konzentrator

## Patentansprüche

1. Fernmeldenetz, dessen Vermittlungsstellen (ATM, STM) in vorzugsweise überwiegender Anzahl auf der Basis asynchroner Durchschaltung von Nachrichtenpaketen in Nachrichtenzellen fester Länge über virtuelle Verbindungen arbeiten (ATM-Vermittlungen) und in vorzugsweise geringer Anzahl auf der Basis synchroner leitungsvermittelter Durchschaltung arbeiten (STM-Vermittlungen) und bei dem wenigstens eine der ATM-Vermittlungen (ATMV) zusätzlich zu ihrer Ausstattung als ATM-Vermittlung Anschlußmöglichkeiten für mit STM-Vermittlungen verbindenden Übertragungsleitungen aufweist (ATM-Durchgangsvermittlung) oder Anschlußmöglichkeiten sowohl für solche Übertragungsleitungen als auch für mit in STM-Modusinformationen sendende und empfangende Endgeräte (STM-Endgeräte) verbindende Anschlußleitungen aufweist (ATM-Ortsvermittlung),
**gekennzeichnet durch**
den genannten gemischt beschalteten ATM-Vermittlungen (ATM-V) zugehörige Einrichtungen, durch die für die Weitergabe an andere STM-Vermittlungen (STM-V) oder an STM-Endgeräte bestimmte STM-Informationen in Nachrichtenzellen paketiert werden, die kürzer sind als die zwischen ATM-Vermittlungen (ATM-V) übertragenen Standardnachrichtenzellen und jeweils Nachrichtenteile eines einzigen der ankommenden Zeitkanäle enthalten, in denen die STM-Informationen übertragen werden, oder aber in Nachrichtenzellen paketiert werden, die zwar gleich lang sind wie solche Standardnachrichtenzellen, in deren neben dem Zellenkopf vorhandenen Informationsteil (PLK) jedoch die Nachrichtenteile mehrerer ankommender Zeitkanäle, die zum selben einer Vermittlungszielrichtung zugeordneten Koppelfeldausgang der ATM-Vermittlung (ATM-V) durchgeschaltet werden sollten, gemultiplext sind, daß bei ATM-Ortsvermittlungen, bei denen jeweils mehrere STM-Informationen führende Teilnehmeranschlußleitungen durch eine von der Vermittlung abgesetzte Leitungseinheit (SLUR) mit einer zur Vermittlung (ATM-V) führenden Multiplexleitung verbunden sind, den Leitungseinheiten zugeordnete Einrichtungen (P/D, MZE; ZE) vorgesehen sind, durch die ankommende STM-Informationen in Nachrichtenzellen paketiert werden, die gleich lang wie Standardnachrichtenzellen sind und in deren Informationsteil (PLM) die Nachrichtenteile mehrerer Zeitkanäle, in denen die STM-Informationen übertragen werden, ohne Rücksicht auf den Ausgang des Koppelfeldes, zu dem sie vermittelt werden sollen, gemultiplext enthalten sind,
und daß die Leitungseinheiten und Vermittlung verbindenden Multiplexleitungen vermittlungsseitig in Umsetzeinrichtungen (AUBe) münden, durch die die Nachrichtenzellen der letztgenannten Art in vorgenannte kürzere Nachrichtenzellen oder in vorgenannte Nachrichtenzellen mit gemultiplexten Teilinformationen zieleinheitlicher Zeitkanäle oder aber, sofern die Informationen zur Weitergabe einer anderen ATM-Vermittlung bestimmt sind, in Standardnachrichtenzellen umgesetzt werden.

2. Fernmeldenetz nach Anspruch 1,
**dadurch gekennzeichnet**,
daß die den abgesetzten Leitungseinheiten (SLUR) zugeordneten Einrichtungen aus einer Paketier-/Depaketiereinrichtung (P/D) und einem Multiplexzellenerzeuger (MZE) bestehen und Bestandteil der abgesetzten Leitungseinheiten (SLUR) sind.

3. Fernmeldenetz nach Anspruch 2,
**dadurch gekennzeichnet**,
daß in den abgesetzten Leitungseinheiten (SLUR) der Paketier-Depaketiereinrichtung (P/D) eine STM-Schmalbandkoppelstufe (SNN) vorgeschaltet ist, an die mit Schmalbandteilnehmern verbindende Teilnehmeranschlußleitungen angeschlossen sind und dem Multiplexzellenerzeuger (MZE) eine ATM-Breitbandkoppelstufe (ASN) nachgeschaltet ist, an die außerdem mit Breitbandteilnehmern verbindende, ATM-Informationenen führende Teilnehmeranschlußleitungen angeschlossen sind.

4. Fernmeldenetz nach Anspruch 1,
**dadurch gekennzeichnet**,
daß die den abgesetzten Leitungseinheiten (SLUR) zugeordneten Einrichtungen jeweils aus einer Vielzahl von Paketier-Depaketiereinrichtungen (P/D) und einer Vielzahl von Zellenerzeugereinrichtungen (ZE), die jeweils Bestandteil von Funktionseinheiten (SLM) sind, die den an eine Leitungseinheit (SLUR) angeschlossenen Teilnehmeranschlußleitungen individuell zugeordnet sind, sowie aus einem Multiplexzellenerzeuger (MZE) bestehen, der Bestandteil der Leitungseinheit (SLUR) ist.

5. Fernmeldenetz nach Anspruch 4,
**dadurch gekennzeichnet**,
daß die Zellenerzeugereinheiten (ZE) der Funkionseinheiten (SLM) Multiplexzellenerzeugereinheiten sind.

6. Fernmeldenetz nach Anspruch 4.,
**dadurch gekennzeichnet**,
daß die Zellenerzeugereinheiten (ZE) der Funktionseinheiten (SLM) der Erzeugung von Kurzzellen dienen.

7. Fernmeldenetz nach Anspruch 4,
**dadurch gekennzeichnet**,
daß die Zellenerzeugereinheiten (ZE) der Funktionseinheiten (SLM) der Erzeugung von Zellen der Länge von Standardzellen dienen, deren Informationsteil jedoch nur teilweise gefüllt ist.

8. Fernmeldenetz nach einem der vorhergehenden Ansprüche,
**dadurch gekennzeichnet**,
daß bei Ortsvermittlungen, bei denen jeweils mehrere STM-Informationen führende Teilnehmeranschlußleitungen durch in der Vermittlung angeordnete Leitungseinheiten (SLUL) zusammengefaßt sind, die Einrichtungen zur Bildung der genannten Nachrichtenzellen geringerer Länge als Standardnachrichtenzellen oder von Nachrichtenzellen, die jeweils für denselben Koppelfeldausgang bestimmte Nachrichtenteile mehrerer ankommender Zeitkanäle enthalten, zumindest soweit es der für die Funktion der eigentlichen Zellenerzeugung (ZE) maßgeblichen Teil betrifft, Bestandteil der genannten Leitungseinheiten (SLUL) sind (FIG 6).

9. Fernmeldenetz nach Anspruch 8,
**dadurch gekennzeichnet**,
daß sowohl der für die Paketier-Depaketierfunktionen maßgebliche Teil (P/D) als auch der für die eigentliche Zellenerzeugung maßgebliche Teil (ZE) der Einrichtungen zur Bildung der Nachrichtenzellen Bestandteil der vermittlungszugehörigen Leitungseinheiten (SLUL) sind (FIG 6; A).

10. Fernmeldenetz nach Anspruch 8,
**dadurch gekennzeichnet**,
daß der für die Paketier-/Depaketierfunktion (P/D) maßgebliche Teil der Einrichtungen zur Bildung der Nachrichtenzellen Bestandteil von den an eine Leitungseinheit (SLUL) angeschlossenen Teilnehmeranschlußleitungen individuell zugeordneten Funktionseinheiten (SLM) ist und daß diese Funktionseinheiten zusätzlich Einrichtungen (ZE/ZEM) zur Erzeugung von Kurzzellen oder von Multiplexzellen enthalten (FIG 6; B).
